# EUROPEAN PATENT SPECIFICATION

(11) **EP 2 887 431 B1**
(45) Date of publication and mention of the grant of the patent: **15.05.2019**
(21) Application number: 14195926.2
(22) Date of filing: 02.12.2014
(51) Int. Cl.: H01M 4/36, H01M 4/38, H01M 4/583, H01M 4/587, H01M 4/62, H01M 4/04, H01M 4/134, H01M 4/1395, H01M 10/0525, H01M 4/02

(54) **Silicon core/shell nanomaterials for high performance anode of lithium ion batteries**
Siliciumkern/-schalen-Nanomaterialien für eine Hochleistungsanode von Lithium-Ionen-Batterien
Nanomatériaux de noyau/enveloppe de silicium pour anode haute performance de batteries au lithium-ion

(30) Priority: 09.12.2013 US 201361963611 P; 13.11.2014 US 201414541111
(43) Date of publication of application: 24.06.2015
(73) Proprietor: Nano And Advanced Materials Institute Limited, Kowloon, Hong Kong (CN)
(72) Inventor: Liu, Chenmin, Kowloon (CN); Cai, Lifeng, Kowloon (CN); Choi, Shing Yan, Kowloon (CN); Wong, Ka Kan, Kowloon (CN)
(74) Representative: Modiano, Micaela Nadia

(56) References cited:
- REZAN DEMIR CAKAN ET AL: "Hydrothermal carbon spheres containing silicon nanoparticles: synthesis and lithium storage performance", CHEMICAL COMMUNICATIONS, no. 32, 13 June 2008 (2008-06-13), page 3759, XP055188150, ISSN: 1359-7345, DOI: 10.1039/b805671b
- YONG-SHENG HU ET AL: "Superior Storage Performance of a Si@SiOx/C Nanocomposite as Anode Material for Lithium-Ion Batteries", ANGEWANDTE CHEMIE INTERNATIONAL EDITION, vol. 47, no. 9, 15 February 2008 (2008-02-15), pages 1645-1649, XP055043259, ISSN: 1433-7851, DOI: 10.1002/anie.200704287
- HUI WU ET AL: "Engineering Empty Space between Si Nanoparticles for Lithium-Ion Battery Anodes", NANO LETTERS, vol. 12, no. 2, 8 February 2012 (2012-02-08), pages 904-909, XP055088635, ISSN: 1530-6984, DOI: 10.1021/nl203967r
- YONG WAN ET AL: "Synthesis of Silica/Carbon-Encapsulated Core-Shell Spheres: Templates for Other Unique Core-Shell Structures and Applications in in Situ Loading of Noble-Metal Nanoparticles", LANGMUIR, vol. 24, no. 9, 26 March 2008 (2008-03-26) , pages 5024-5028, XP055188147, ISSN: 0743-7463, DOI: 10.1021/la703578u
- TERRANOVA MARIA LETIZIA ET AL: "Si/C hybrid nanostructures for Li-ion anodes: An overview", JOURNAL OF POWER SOURCES, ELSEVIER SA, CH, vol. 246, 27 July 2013 (2013-07-27), pages 167-177, XP028739873, ISSN: 0378-7753, DOI: 10.1016/J.JPOWSOUR.2013.07.065
- NIAN LIU ET AL: "A Yolk-Shell Design for Stabilized and Scalable Li-Ion Battery Alloy Anodes", NANO LETTERS, vol. 12, no. 6, 13 June 2012 (2012-06-13), pages 3315-3321, XP055216691, ISSN: 1530-6984, DOI: 10.1021/nl3014814

## Description

### Cross Reference to Related Application:

This application claims priority from US provisional patent application serial number 61/963,611 filed December 9, 2013 and US non-provisional patent application serial number 14/541,111 filed November 18, 2014.

### Field of the Invention:

The present invention relates to a nanomaterial for an anode of lithium batteries. More particularly, the present invention relates to a Si@C core/shell nanomaterial for an anode of lithium batteries, and a corresponding method for fabricating the nanomaterial.

### Background:

The current crop of battery technology seems unable to keep up with the increasing demands that we are placing on our ever-growing collection of mobile devices. More importantly, a future with millions of fossil-fuel powered cars displaced by plug-in electric vehicles presents significant economic and environmental benefit. This is why research targeted into the next generation battery technology is such a focus around the world.

Today's electric vehicles rely on nickel-metal hydride batteries for long-distance travel. They are heavy and bulky, and have a specific energy that is too low, with about 80 watt hours per kilogram (Wh/kg). In contrast, Li-ion batteries, commonly used in handheld electronics, can offer greater capacity.

The present commercial available lithium ion batteries are composed of three main components: a graphite anode, a cathode and an electrolyte. The graphite anode has specific capacity of about 350 mAh/g. Lithium ion batteries using graphite anodes exhibit a typical energy of more than 160Wh/kg, being double than that of nickel-metal hydride batteries. However, this is still not enough for long driving distance. If we want to increase driving distance of electric vehicles, we need to have much better capacity, which is at least double the capacity of graphite anodes used in the lithium ion battery.

One of the limiting factors of the lithium ion battery comes from the graphite of its anode. With a theoretical capacity of more than 10 times to that of graphite, silicon anodes can at least double the capacity of graphite anode batteries.

The practical use of Si powders as an anode in lithium ion batteries is still hindered by two major problems: the low intrinsic electric conductivity and severe volume change during Li insertion/extraction processes, leading to poor cycling performance. During charging, silicon anodes expand dramatically, and will break down quickly.

Tremendous efforts have been made to overcome these problems by decreasing the particle size, [B. Gao, S. Sinha, L. Fleming, Q. Zhou, Adv. Mater. 2001, 13, 816-819; G. W. Zhou, H. Li, H. P. Sun, D. P. Yu, Y. Q. Wang, X. J. Huang, L. Q. Chen, Z. Zhang, Appl. Phys. Lett. 1999, 75, 2447-2449]. Materials scientists have tried a work-around by forming the silicon into nanoparticles and connecting them with an inert polymer binder and a graphite electrical conductor to improve performance. After a few charging and discharging cycles, however, the graphite tends to lose contact with the silicon nanoparticles, reducing its conductivity. Silicon nanowires/nanotubes have been identified as a promising method to solve the big volume change problem in the past few years [H. Kim and J. Cho, Nano Letters 2008, 8, 3688-3691; M-H Park, M. G. Kim, et al, Nano Letters, 2009, 9, 3844-3847; L. Cui and Y. Cui, Nano Letters. 2008, 3, 31]. However, all of the methods need high temperature reaction (~1000°C) and vacuum condition for a long time, which makes the resulting silicon nanowires extremely expensive (1150-5000 USD/per gram). Moreover, the complicated synthesis process makes scale-up very difficult and to achieve 100 gram products is impossible.

Consequently, there is an unmet need for an anode material of lithium ion battery providing high electric conductivity, advanced cycling performance, low cost, and ease to be scaled-up for manufacturing.

Rezan, Demir, Cakan et al, "Hydrothermal carbon spheres containing silicon nanoparticles: synthesis and lithium storage performance", Chemical Communications, (20080613), no. 32, discloses spherically shaped carbon/silicon nanocomposites obtained in a one-step procedure using hydrothermal carbonization of glucose in the presence of commercially available silicon nanoparticles which have been tested electrochemically as an anode material for lithium-ion batteries.

Yong-Sheng Hu et al, "Superior Storage Performance of a Si@SiOx/C Nanocomposite as Anode Material for Lithium-Ion Batteries", Angewandte Chemie International Edition, (20080215), vol. 47, no. 9, discloses hydrothermal carbonization of glucose in the presence of Si nanoparticles yielding a Si@SiOx/C nanocomposite, potentially useful as an anode material in lithium-ion batteries.

Hui Wu et al., "Engineering Empty Space between Si Nanoparticles for Lithium-Ion Battery Anodes", Nano Letters, (20120208), vol. 12, no. 2, discloses engineering an empty space between Si nanoparticles by encapsulating them in hollow carbon tubes.

Yong Wan et al, "Synthesis of Silica/Carbon-Encapsulated Core-Shell Spheres: Templates for Other Unique Core-Shell Structures and Applications in in Situ Loading of Noble-Metal Nanoparticles", Langmuir, (20080326), vol. 24, no. 9, discloses silica@carbon core-shell spheres synthesized via a hydrothermal carbonization procedure with glucose as the carbon precursor and silica spheres as the cores.

Terranova Maria Letizia et al, "Si/C hybrid nanostructures for Li-ion anodes: An overview", Journal of Power Sources, Elsevier SA, CH, (20130727), vol. 246, discloses a hydrothermal synthesis method for producing carbon coated SiO2 nanoparticles particles using ethanol and glucose.

Nanu Liu et al., A Yolk-Shell Design for Stabilized and Scalable Li-Ion Battery Alloy Anodes", Nano Letters, (20120613) vol. 12, no. 6, discloses a yolk-shell structure comprising Si nanoparticles sealed inside carbon shells, with rationally designed void space in between the particles and the shell.

### Summary of the Invention:

The invention provides a method for fabricating a silicon core/carbon shell material for an anode material.

In accordance with the presently claimed invention, a method for fabricating a silicon core/carbon shell material for an anode material, comprises: providing silicon particles; providing a structure directing agent comprising alcoholic solvent and water; mixing the silicon particles with the structure directing agent and a carbon source to form a reaction mixture, wherein the silicon particles are dispersed in the alcoholic solvent to form silicon particle aggregation droplets; heating the reaction mixture by a hydrothermal process to form one or more silicon cores and one or more carbon shells, wherein each of the silicon cores comprises a plurality of silicon clusters formed from the silicon particle aggregation droplets, and is enclosed by the carbon shell; and calcinating the silicon cores enclosed by the carbon shell by a calcination process for further carbonizing the carbon shells.

The present invention is to tackle the volume expansion problem of the Si anode materials in the application of lithium ion batteries. In the present invention, a simple and green hydrothermal method is use to form loosely packed Si@C core/shell structure. A carbon coating layer is formed on controllably aggregated silicon nanoparticles in a one-step procedure by the hydrothermal carbonization of a carbon-rich precursor. The Si@C core/shell structure provides good battery performances, including stable cycle ability, good capacity and good operation ability.

### Brief Description of the Drawings:

Embodiments of the present invention are described in more detail hereinafter with reference to the drawings, in which:
FIG. **1** is a schematic diagram showing a Si nanoclusters@C core/shell nanostructure during a charging/discharging process according to an embodiment of the presently claimed invention;
FIG. **2A-C** show an electrode during normal condition, charging, and discharging respectively according to an embodiment of the presently claimed invention;
FIG. **3** is a flow chart showing the steps of a method for fabricating the Si@C core/shell nanomaterials according to an embodiment of the presently claimed invention;
FIG. **4** is a schematic diagram showing a hydrothermal synthesis to make Si@C core@shell nanoparticles according to an embodiment of the presently claimed invention;
FIG. **5A-B** are TEM images of the as-prepared Si nanoclusters@C core/shell nanostructure according to Example 1 of the presently claimed invention;
FIG. **6A-B** are graphs showing battery performance using Si nanocluster@ C core/shell nanomaterials as an anode material under 0.2C and 0.5C respectively according to Example 1;
FIG. **7A** is a TEM image of the as-prepared Si nanoclusters@C core/shell nanostructure according to Example 2 of the presently claimed invention; and
FIG. **7B** is graph showing battery performance using Si nanocluster@ C core/shell nanomaterials as the anode material under 0.2C according to Example 2.

### Detailed Description of Preferred Embodiments:

In the following description, Si@C core/shell nanomaterials for an anode of lithium batteries and the corresponding embodiments of the fabrication method are set forth as preferred examples. It will be apparent to those skilled in the art that modifications, including additions and/or substitutions, may be made without departing from the scope of the appended claims. Specific details may be omitted so as not to obscure the invention; however, the disclosure is written to enable one skilled in the art to practice the teachings herein without undue experimentation.

This invention is to address the challenge by carefully designing the silicon particle structure and architecture that would maintain structural integrity. Unlike CVD/VLS/heat decompose-grown nanowires which are extremely expensive, hydrothermal methods and solution approaches will be used to provide a cost effective way to make silicon composite anode which would significantly improve the performance of lithium ion batteries.

To tackle the most major problems of the current Si anode technology, in this invention, a carbon shell is used to increase the electric conductivity of the Si materials, and a Si nanocluster@C core/shell structure is used to accommodate more volume change leading to good cycling performance.

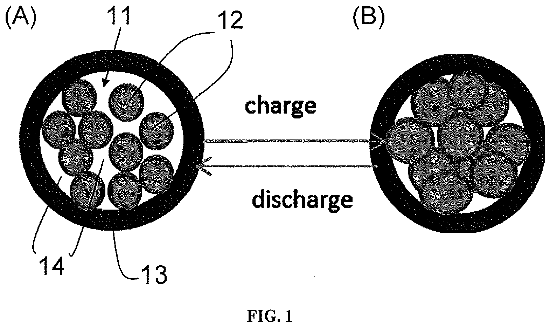

FIG. **1A-B** are schematic diagrams showing how a Si nanoclusters@C core/shell nanostructure accommodate volume change during a charging and a discharging process respectively according to an embodiment of the presently claimed invention. As shown in FIG. **1A**, the Si nanoclusters@C core/shell nanostructure **11** comprises a Si core **11**, further comprising a plurality of aggregated Si nanoclusters **12**, a carbon shell **13**, and gaps **14**. The carbon shell **13** encloses the Si core **11**, and is chemically in contact with the Si core **11**. Each of the aggregated Si nanoclusters 12 is formed from a plurality of Si nanoparticles. The gaps **14** are present among the aggregated Si nanoclusters **12**, and between the Si core **11** and the carbon shell **13**.

The aggregated Si nanoclusters **12** are loosely packed inside the carbon shell **13**, generating a lot of the gaps **14**, which can provide enough spaces for expansion of the aggregated Si nanolusters **12** due to impregnation of lithium ions into the aggregated Si nanoclusters **12** during the charging process as shown in FIG. **1B**.

What is more, as the carbon shell **13** is chemically grown on the aggregated Si nanoclusters **12**, that can offer good conductivity during charging/discharging cycling.

Preferably, the Si nanoclusters@C core/shell nanostructure has a diameter of 50 to 500 nm, the carbon shell comprises a diameter of 50 to 500 nm, and the thickness of the carbon shell is 10-100 nm.

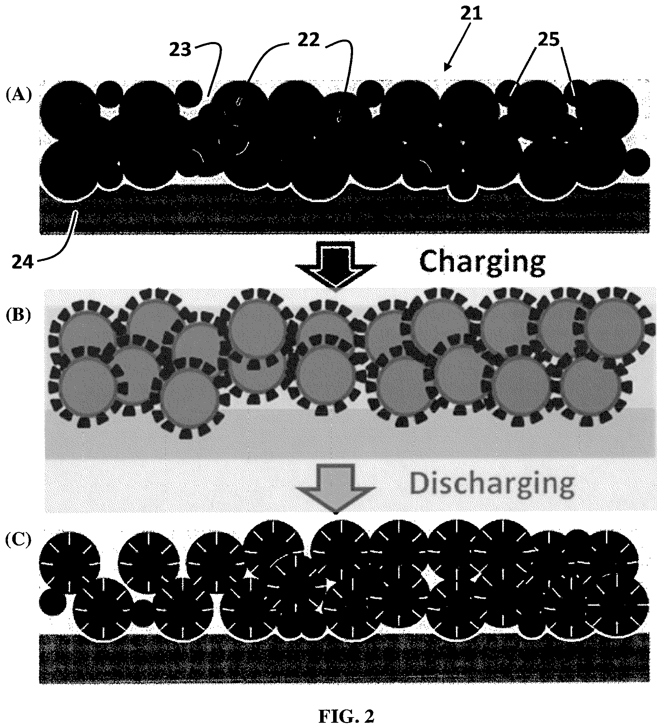

FIG. **2A-C** show an electrode during a normal condition, charging, and discharging respectively according to an embodiment of the presently claimed invention. As shown in FIG. **2A**, the electrode comprises an anode slurry **21**, including a plurality of Si nanoclusters@C core/shell nanostructures **22** and an electrolyte **23**, and a foil **24**. The anode slurry **21** is coated on the foil **24**. The electrolyte **23** is in contact with the anode slurry **21**. During charging as shown in FIG. **2B**, the Si nanoclusters@C core/shell nanostructures **22** are expanded while their carbon shells are not broken due to the presence of gaps. During discharging as shown in FIG. **2C**, the Si nanoclusters@C core/shell nanostructures **22** are shrank due to leaving of lithium ions from the Si nanoclusters@C core/shell nanostructures **22**. After the charging/discharging process, some freestanding carbon particles **25** may be generated.

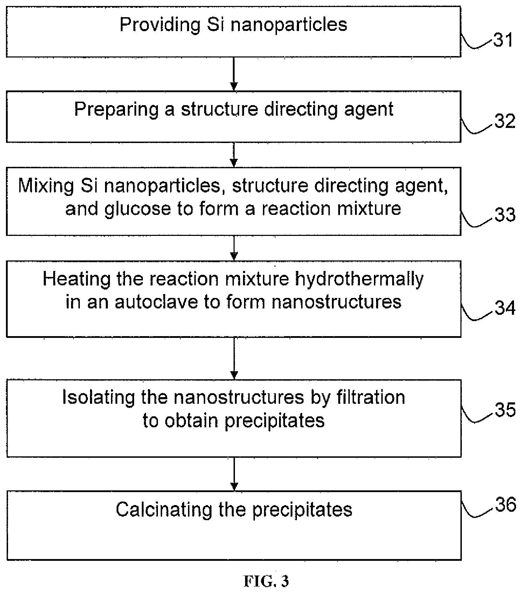

FIG. **3** is a flow chart showing the steps of a method for fabricating a Si nanoclusters@C core/shell nanomaterial according to an embodiment of the presently claimed invention. In step **31**, Si nanoparticles are provided. Preferably, the diameter of the Si nanoparticles is 20-200 nm. In step **32**, a structure directing agent is prepared by mixing water and ethanol together. Preferably, the ratio of water to ethanol is in a range of 40:1 to 20:1 by volume. Since the Si nanoparticles can only be well dispersed in ethanol, the ratio of ethanol to water decides the size of the silicon aggregated nanoparticles droplets, which will form into nanoclusters after the separation of the droplets then followed by calcination. In step **33**, the Si nanoparticles, the structure directing solution, and a glucose solution are mixed to form a reaction mixture. The Si nanoparticles are dispersed in the ethanol to form Si nanoparticle aggregation droplets. Preferably, the reaction mixture comprises 0.01-0.2g/mL of silicon nanoparticles, 0.02-0.1g/mL of ethanol, and 0.05-1.2g/mL of glucose. The concentration of the glucose solution decides the thickness of the carbon shell. In step **34**, the reaction mixture is heated hydrothermally in an autoclave to form Si cores comprising Si nanoclusters formed from the Si nanoparticle aggregation droplets and carbon shells enclosing each of the Si cores for formation of Si nanoclusters @C core/shell nanostructures. Preferably, the hydrothermal process comprises a reaction temperature of 180 to 220°C, a reaction pressure of 1.5 to 3 atm, a reaction time of 8 to 24 hr, and a pH value of 4 to 11. In step **35**, the Si nanoclusters@C core/shell nanostructures are isolated by filtration to obtain precipitates of the Si nanoclusters@C core/shell nanostructures. In step **36**, the precipitates are calcinated for further carbonization, leading to thorough formation of the inorganic carbon shell. Preferably, the precipitates are calcinated at 350-400°C for 2-4 hr, and then 750-850°C for 2-5 hr.

Apart from ethanol, other alcoholic solvent can be used such as methanol or propanol. Preferably, the ratio of water to the alcoholic solvent is in a range of 40:1 to 20:1 by volume.

Apart from glucose, other carbon sources can be used like glucose, cyclodextrin, sucrose, and combinations thereof. Preferably, a ratio of the silicon nanoparticles and the carbon source is in a range of 1:20 to 1:1 by weight.

Accordingly, regarding the formation of the structure directing agent, the ratio of water to ethanol is critical to control the size of silicon aggregation droplets. The size of the droplets decides the aggregation level of the silicon nanoparticles and the buffer rooms among the silicon nanoparticles, which is very essential to accommodate the volume change. Both of the hydrothermal process and the calcination process contribute to the formation of the carbon shell. More particularly, the calcination process contributes a lot to increase the electrical conductivity.

By well tuning the reaction temperature, reaction time, pH value, structure directing agents with such as CTAB (cetyltrimethylammonium bromide), SDBS (sodium dodecyl benzene sulfonate) etc., the micro-structure of the silicon nanoclusters, carbon shell, including the thickness, the porosity, and the shape can be finely controlled. Silicon clusters loosely packed in porous carbon layer with good integrity is formed which can accommodate large volume change during the charging and discharging process while providing higher electrical conductivity.

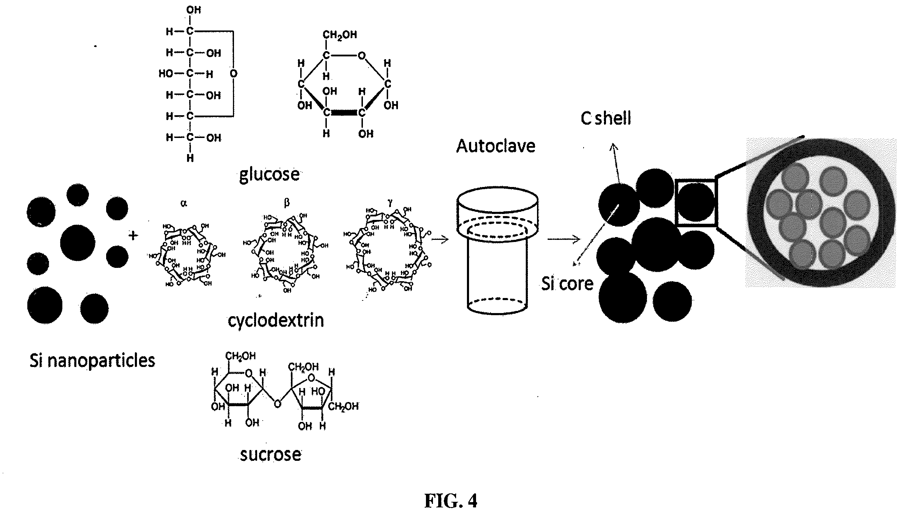

FIG. **4** is a schematic diagram showing a hydrothermal synthesis to make Si nanoclusters@C core/shell nanostructures according to an embodiment of the presently claimed invention. Si nanoparticles are mixed with a carbon source solution, and a structure directing agent to form a reaction mixture. The reaction mixture is heated hydrothermally in an autoclave to obtain Si nanoclusters@C core/shell nanostructures. Each of the nanostructures comprises silicon core, and carbon shell, and the silicon core comprises a plurality of Si nanoclusters.

### Uniqueness and advantages:

a. The aggregation of the silicon nanoparticles can be well controlled, and the Si@C core/shell nanostructure of the present invention have gaps between the silicon core and the carbon shell, which can accommodate more volume changes of the silicon nanoparticles for avoiding cracking of the nanostructures during the charging/discharging process.
b. Instead of mechanically mixing of the carbon particles and silicon particles, carbon shells are chemically grown on the surface of the silicon nanoparticles. The chemical bond between the carbon and the silicon will not be broken even after the charging/discharging process. The conductivity will be maintained after lithium insertion/extraction cycles in this kind of core shell structure. The internal channels in the silicon-carbon spheres serve two purposes. They admit liquid electrolyte to allow rapid entry of lithium ions for quick battery charging, and they provide space to accommodate expansion and contraction of the silicon without cracking the anode. The internal channels and nanometer-scale particles also provide short lithium diffusion paths into the anode, boosting battery power characteristics. The electrode change during the charging and discharging procedure is shown in FIG. **2**.
c. From the battery performance testing results, it has been clearly observed that the Si@C (silicon nanoparticles clusters in carbon shell) nanomaterials of the present invention have very good cycle stability and good capacity comparing to other reported Si mateirals.

The main key feature encompasses three key steps:
(1) Formula development of the synthesis of Si nanocluster@C core/shell materials;
(2) Anode slurry formulation and process development to make a good electrode film;
(3) Optimization of cell assembly to make a cell with high performance.

The present invention provides Si@C (Silicon nanoparticles clusters in carbon shell) nanomaterial synthesis and cell assembly process comprising steps as below.

### A. Formation of active anode material powder

Si nanoparticles are mixed with some solvents together with some carbon source to form a mixture, which is hydrothermally heated to form a resulting precipitate. Then, the resulting precipitate is calcinated under certain temperature and inert gas such as nitrogen and argon to form a silicon nanoclusters@ carbon core shell structure. The synthetic procedure of the Si nanocluster@C core/shell nanostructures is shown in FIG. 4, providing a simple and green method for the formation of commercially available silicon nanoparticles in a one-step procedure with carbon by the hydrothermal carbonization of a carbon-rich precursor, such as glucose, cyclodextrin, or sucrose, etc. Further calcination process can be used for thorough formation of the inorganic carbon shell.

### B. Formation of anode slurry composition

For the anode slurry composition, the active materials powder, comprising Si nanoclusters@C core/shell nanostructures of the present invention (30-90%), Super P (5-20%) and polymer binder (10-50%) are homogenously mixed in a certain solvent. Suitable polymer binders include Sodium Carboxymethyl Cellulose (CMC), Sodium Alginate, and combination thereof. Suitable solvents include N-Methyl pyrrolidinone (NMP), ethanol, water, and combination thereof.

### C. Formation of electrode

The above slurry is ball milled in a condition ball miller (Frisch Planetary Micro Mill PULVERISETTE 7 premium line) and mixed in a condition mixer (AR-100, Thinky). The slurry is coated uniformly on copper or aluminum foil. Finally, the electrode is dried in air at 60 °C for 1 hour under vacuum at 110 °C for 12 hours. Electrode is cut into circular pieces.

### D. Cell assembly

Pressure (0-10MPa) is applied to the electrodes to further enhance the electrical conductivity. Cell assembly is carried out in an argon-filled glove box (M. Braun Co., [O]< 0.5ppm, {H2O}< 0.5ppm). The coin cells are cycled under different current densities between cutoff voltages of 2.5 and 0.8V on a cell test instrument (Arbin instruments).

### Example 1

Example 1: Si nanoclusters @carbon core/shell anode materials with good stability and battery cycle performance.

12 g Si was mixed with 120 ml water under stirring, then 120 g glucose and 4 ml ethanol were added to form a mixture suspension. The mixture was hydrothermally heated at 200°C for 12hr. The resulting material was isolated by filtration. The precipitate is dried in a vacuum oven and then carbonized.

The charge and discharge capacities were measured with coin cells in which a lithium metal foil was used as the counter electrode. The electrolyte employed was 1M solution of LiPF₆ in ethylene carbonate, ethylmethyl carbonate and dimethyl carbonate (EC+ EMC+ DMC) (1:1:1 in volume). The active materials powder (52.5%), Super P(17.5%) and sodium alginate binder (30%) were homogenously mixed in water (alginate:NMP= 1:15) in the condition mixer (AR-100, Thinky). The slurry was coated uniformly on copper and aluminum foil. Finally, the electrode was dried in air at 60 °C for 1 hour under vacuum at 110 °C for 12 hours. Electrode was cut into circular pieces. Half of them are compressed (Cu: 8MPa and Al: 2MPa) and the rest of them are remain uncompressed. Cell assembly was carried out in an argon-filled glove box (German, M. Braun Co., [O]< 0.5ppm, {H2O}< 0.5ppm). The coin cells were cycled under different current densities between cutoff voltages of 2.5 and 0.8V on a cell test instrument (Arbin instruments).

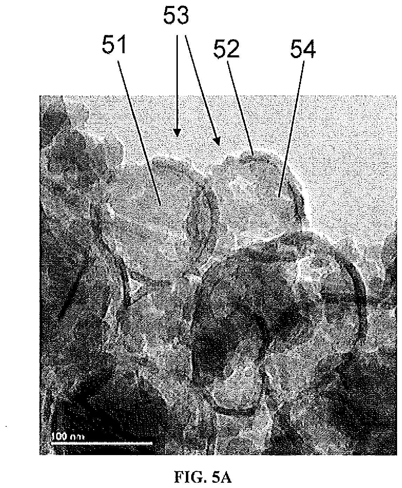

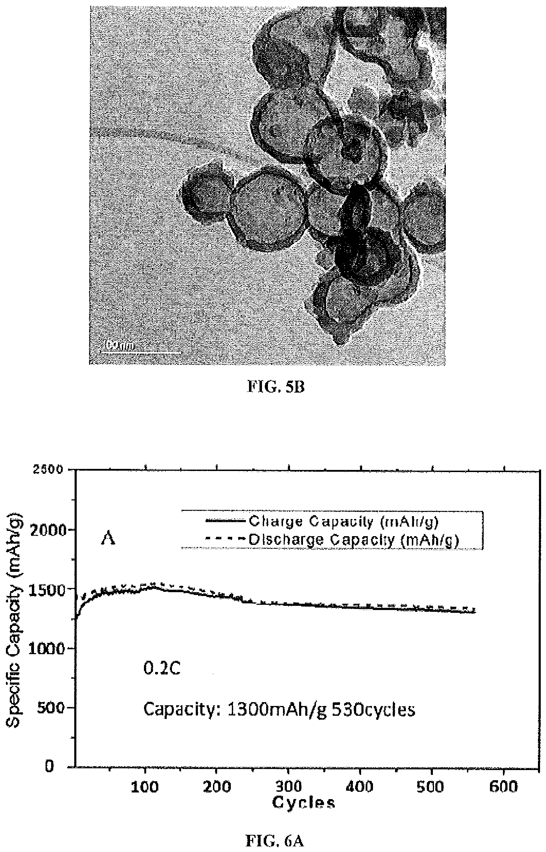

FIG. **5A** shows the TEM morphology of the as-prepared Si nanoclusters@C core/shell nanostructure prepared by Example 1. Silicon nanoclusters **51** are loosely packed into a carbon shell **52** to form a nanoparticle/gap/shell structure **53**. Gaps **54** can provide more buffer room during a charging/discharging process and the carbon shell **53** provides very good conductivity, thus further improving battery performance. FIG. **5B** shows another TEM morphology of the as-prepared Si nanoclusters@C core/shell nanostructure.

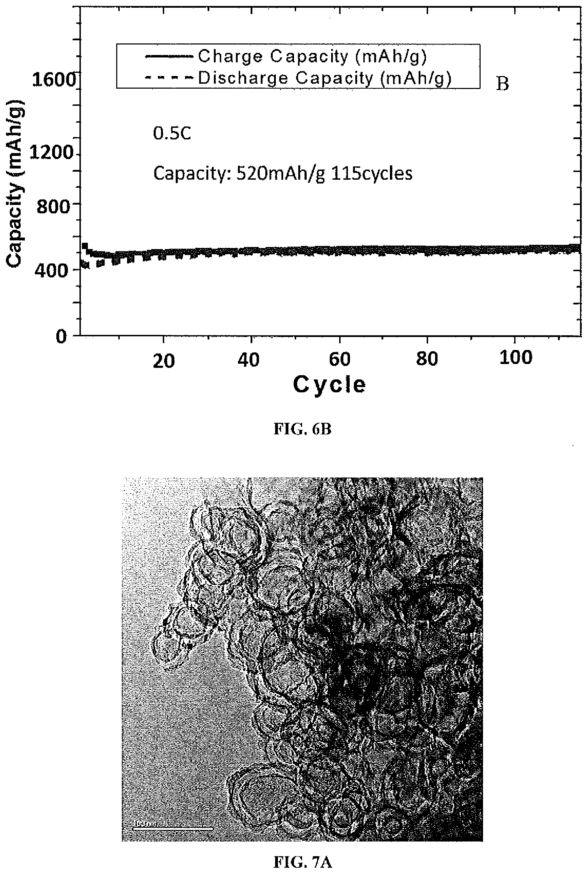

FIG. **6A-B** are graphs showing battery performance using Si nanocluster@ C core/shell nanomaterials as the anode material under 0.2C and 0.5C respectively according to Example 1. With the anode of the lithium ion batteries fabricated by Example 1, the specific capacity can remain above 1300 mAh/g even after 530 cycles under 0.2C and 520 mAh/g after 115 cycles under 0.5C rate. These performances show that the anode materials of the present invention have stable cycle performance and very good capacity, which is around 4 times as that of current graphite materials.

### Example 2

Example 2: Si nanoclusters@carbon core/shell anode materials with thinner carbon shell and less space by tuning the synthesis parameters (lower ethanol content and lower glucose content).

12 g Si was mixed with 120 ml water under stirring, then 40 g glucose and 3 ml ethanol were added to form a mixture suspension. The mixture was hydrothermally heated at 200°C for 12hr. The resulting material was isolated by filtration. The precipitate is dried in a vacuum oven and then carbonized.

The charge and discharge capacities were measured with coin cells in which a lithium metal foil was used as the counter electrode. The electrolyte employed was 1M solution of LiPF6 in ethylene carbonate, ethylmethyl carbonate and dimethyl carbonate (EC+ EMC+ DMC) (1:1:1 in volume). The active materials powder (52.5%), Super P (17.5%) and sodium alginate binder (30%) were homogenously mixed in water (alginate:NMP= 1:15) in the condition mixer (AR-100, Thinky). The slurry was coated uniformly on copper and aluminum foil. Finally, the electrode was dried in air at 60 °C for 1 hour under vacuum at 110 °C for 12 hours. Electrode was cut into circular pieces. Half of them are compressed (Cu: 8MPa and Al: 2MPa) and the rest of them are remain uncompressed. Cell assembly was carried out in an argon-filled glove box (German, M. Braun Co., [O]< 0.5ppm, {H2O}< 0.5ppm). The coin cells were cycled under different current densities between cutoff voltages of 2.5 and 0.8V on a cell test instrument (Arbin instruments).

FIG. **7A** shows the TEM morphology of the as-prepared Si nanoclusters@C core/shell nanostructure prepared by Example 2. It can be seen that with a lower concentration of ethanol, the size of the nanostructure is smaller, comparing with that prepared by Example 1. What is more, by lower down the content of glucose, the carbon shell of the nanocluster is thinner.

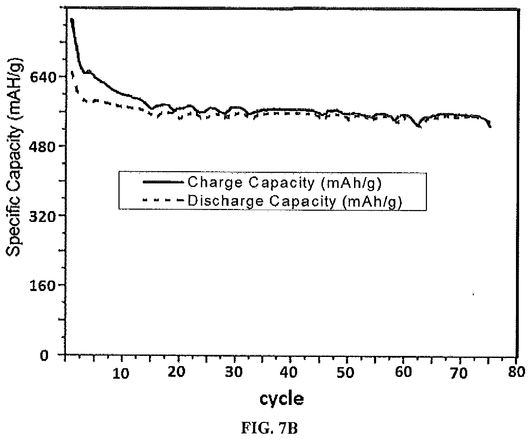

FIG. **7B** is graph showing battery performance using Si nanocluster@ C core/shell nanomaterials as the anode material under 0.2C according to Example 2. With the anode of the lithium ion batteries fabricated by Example 2, the specific capacity can remain ∼550mAh/g even after 75 cycles under 0.2C. These performances show that the anode materials of the present invention still have stable cycle performance; however, the capacity drops down due to the compact aggregation of the Si nanoclusters. Thus, an appropriate ratio of water to alcoholic solvent is crucial to achieve high specific capacity.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A method for fabricating a silicon core/carbon shell material for an anode material of a lithium ion battery, comprising:
providing silicon particles comprising a size in a range of 20 to 200 nm;
providing a structure directing agent by mixing ethanol and water;
mixing the silicon particles with the structure directing agent and a carbon source to form a reaction mixture comprising a ratio of the silicon particles and the carbon source within a range of 1:20 to 1:1 by weight, wherein the silicon particles are dispersed in ethanol to form silicon particle aggregation droplets;
heating the reaction mixture by a hydrothermal process to form one or more silicon cores and one or more carbon shells, wherein each of the silicon cores comprises a plurality of silicon clusters formed from the silicon particle aggregation droplets, and is enclosed by the carbon shell; and
calcinating the silicon cores enclosed by the carbon shell by a calcination process for further carbonizing the carbon shells;
wherein the structure directing agent comprises a ratio of water to ethanol in a range of 40:1 to 30:1 by volume;
wherein the reaction mixture comprises 0.01-0.2 g/mL of the silicon particles, 0.02-0.1 g/mL of the ethanol, and 0.05-1.2 g/mL of the carbon source;
wherein the hydrothermal process is performed in an autoclave, and comprises a reaction temperature of 180-220°C, a reaction pressure of 1.5-3 atm, a reaction time of 8-24 hr, and a pH of 4-11; and
wherein the calcination process comprises a first calcination process performed with a first calcination temperature of 350-420°C and a first calcination period of 2-4 hr, and a second calcination process performed with a second calcination temperature of 750-850°C and a second calcination period of 2-5 hr.

2. The method of claim 1, wherein the carbon source is selected from the group consisting of glucose, cyclodextrin, sucrose, and combinations thereof.

3. The method of claim 1, wherein the calcination process is performed under inert gas.

## Patentansprüche

1. Ein Verfahren zur Herstellung eines Siliziumkern/Kohlenstoffschalenmaterials für ein Anodenmaterial einer Lithium-Ionen-Batterie, das Folgendes umfasst:
Bereitstellen von Siliziumpartikeln umfassend eine Größe in einem Bereich von 20 bis 200 nm;
Bereitstellen eines Struktursteuerungsmittels durch Mischen von Ethanol und Wasser;
Mischen der Siliziumpartikel mit dem Struktursteuerungsmittel und einer Kohlenstoffquelle, um eine Reaktionsmischung umfassend ein Verhältnis der Siliziumpartikel und der Kohlenstoffquelle in einem Bereich von 1:20 bis 1:1 bezogen auf das Gewicht zu bilden, worin die Siliziumpartikel in Ethanol dispergiert sind, um Siliziumpartikel-Aggregationströpfchen zu bilden;
Erhitzen der Reaktionsmischung durch ein hydrothermales Verfahren, um einen oder mehrere Siliziumkerne und eine oder mehrere Kohlenstoffschalen zu bilden, worin jeder der Siliziumkerne eine Vielzahl von Siliziumclustern gebildet aus den Siliziumpartikel-Aggregationströpfchen umfasst, und durch die Kohlenstoffschale eingeschlossen ist; und
Kalzinieren der Siliziumkerne, die von der Kohlenstoffschale eingeschlossen sind, durch ein Kalzinationsverfahren, um die Kohlenstoffschalen weiter zu karbonisieren;
worin das Struktursteuerungsmittel ein Verhältnis von Wasser zu Ethanol in einem Bereich von 40:1 bis 30:1 bezogen auf das Volumen umfasst;
worin die Reaktionsmischung 0,01 bis 0,2 g/ml der Siliziumpartikel, 0,02-0,1 g/ml von dem Ethanols, und 0,05-1,2 g/ml der Kohlenstoffquelle umfasst;
worin das hydrothermale Verfahren in einem Autoklav durchgeführt wird, und eine Reaktionstemperatur von 180-220°C, einen Reaktionsdruck von 1,5-3 Atm, eine Reaktionszeit von 8-24 Stunden, und einen pH von 4-11 umfasst; und
worin das Kalzinationsverfahren ein erstes Kalzinationsverfahren durchgeführt mit einer ersten Kalzinationstemperatur von 350-420°C und einem ersten Kalzinationszeitraum von 2-4 Stunden, und ein zweites Kalzinationsverfahren durchgeführt mit einer zweiten Kalzinationstemperatur von 750-850°C und einem zweiten Kalzinationszeitraum von 2-5 Stunden umfasst.

2. Das Verfahren gemäß Anspruch 1, worin die Kohlenstoffquelle gewählt ist aus der Gruppe bestehend aus Glukose, Cyclodextrin, Saccharose, und Kombinationen daraus.

3. Das Verfahren gemäß Anspruch 1, worin das Kalzinationsverfahren unter inertem Gas durchgeführt wird.

## Revendications

1. Procédé de fabrication d'un matériau à noyau de silicium et enveloppe de carbone pour matériau d'anode d'un accumulateur lithium-ion, comportant les étapes suivantes :
- prendre des particules de silicium, de taille située dans l'intervalle allant de 20 à 200 nm,
- préparer un agent structurant en mélangeant de l'éthanol et de l'eau,
- mélanger les particules de silicium avec l'agent structurant et une source de carbone pour en faire un mélange réactionnel dans lequel le rapport des particules de silicium et de la source de carbone se situe dans l'intervalle allant de 1/20 à 1/1 en poids et les particules de silicium sont dispersées dans l'éthanol et forment des gouttelettes à agrégats de particules de silicium,
- chauffer ce mélange réactionnel par un processus hydrothermique pour former un ou plusieurs noyau(x) de silicium et une ou plusieurs enveloppe(s) de carbone, où chacun des noyaux de silicium comprend des clusters de silicium formés à partir des gouttelettes à agrégats de particules de silicium et se trouve enfermé dans une enveloppe de carbone,
- et calciner les noyaux de silicium enfermés dans leurs enveloppes de carbone, par un processus de calcination, pour carboniser encore davantage les enveloppes de carbone ;
et dans lequel procédé :
- dans l'agent structurant, le rapport de l'eau à l'éthanol se situe dans l'intervalle allant de 40/1 à 30/1 en volume,
- le mélange réactionnel comprend de 0,01 à 0,2 g/mL de particules de silicium, de 0,02 à 0,1 g/mL d'éthanol, et de 0,05 à 1,2 g/mL de la source de carbone,
- le processus hydrothermique est réalisé en autoclave, à une température de réaction de 180 à 220 °C, sous une pression de réaction de 1,5 à 3 atm, avec une durée de réaction de 8 à 24 heures et à un pH de 4 à 11,
- et le processus de calcination comporte une première opération de calcination, effectuée à une température de première calcination de 350 à 420 °C durant un temps de première calcination de 2 à 4 heures, et une deuxième opération de calcination, effectuée à une température de deuxième calcination de 750 à 850 °C durant un temps de deuxième calcination de 2 à 5 heures.

2. Procédé conforme à la revendication 1, dans lequel la source de carbone est choisie dans l'ensemble formé par du glucose, de la cyclodextrine, du saccharose et leurs combinaisons.

3. Procédé conforme à la revendication 1, dans lequel le processus de calcination est réalisé sous atmosphère de gaz inerte.
